# EUROPEAN PATENT SPECIFICATION

(11) **EP 1 276 958 B1**
(45) Date of publication and mention of the grant of the patent: **21.12.2005**
(21) Application number: 01943285.5
(22) Date of filing: 24.04.2001
(51) Int. Cl.: E21B 36/04

(54) **ELECTRICAL WELL HEATING SYSTEM AND METHOD**
ELEKTRISCHE BOHRLOCHHEIZVORRICHTUNG UND VERFAHREN
SYSTEME ET PROCEDE DE CHAUFFAGE ELECTRIQUE D'UN PUITS

(30) Priority: 24.04.2000 US 199214 P
(43) Date of publication of application: 22.01.2003
(73) Proprietor: SHELL INTERNATIONALE RESEARCH MAATSCHAPPIJ B.V., 2596 HR Den Haag (NL)
(72) Inventor: DE ROUFFIGNAC, Eric, Houston, TX 77005 (US); VINEGAR, Harold, J., Houston, TX 77096 (US); WELLINGTON, Scott, Lee, Bellaire, TX 77401 (US); KEEDY, Charles, Robert, Houston, TX 77084 (US); HUNSUCKER, Bruce, Gerard, Katy, TX 77493 (US)
(86) International application number: PCT/EP2001/004659
(87) International publication number: WO 2001/081713

(56) References cited:
- EP-A- 0 940 558
- US-A- 2 703 621
- US-A- 2 932 352
- US-A- 4 704 514
- US-A- 5 060 287

## Description

### Background of the Invention

The invention relates to a method and system for heating a hydrocarbon containing formation, such as a coal layer or an oil shale deposit, surrounding a heat injection well.

Application of heat to oil shale formations is described in U.S. Patent Nos. 2,923,535 to Ljungstrom and 4,886,118 to Van Meurs et al. These prior art references disclose that electrical heaters transmit heat into an oil shale formation to pyrolyze kerogen within the oil shale formation. The heat may also fracture the formation to increase permeability of the formation. The increased permeability may allow formation fluid to travel to a production well where the fluid is removed from the oil shale formation. In some processes disclosed by Ljungstrom, for example, an oxygen containing gaseous medium is introduced to a permeable stratum, preferably while still hot from a preheating step, to initiate combustion.

U.S. Patent No. 2,548,360 describes an electrical heating element placed within a viscous oil within a wellbore. The heater element heats and thins the oil to allow the oil to be pumped from the wellbore. U.S. Patent No. 4,716,960 describes electrically heating tubing of a petroleum well by passing a relatively low voltage current through the tubing to prevent formation of solids. U.S. Patent No. 5,065,818 to Van Egmond describes an electrical heating element that is cemented into a well borehole without a casing surrounding the heating element.

U.S. Patent No. 6,023,554 to Vinegar et al. describes an electrical heating element that is positioned within a casing. The heating element generates radiant energy that heats the casing. A granular solid fill material may be placed between the casing and the formation. The casing may conductively heat the fill material, which in turn conductively heats the formation.

U.S. Patent No. 4,570,715 to Van Meurs et al. describes an electrical heating element. The heating element has an electrically conductive core, a surrounding layer of insulating material, and a surrounding metallic sheath. The conductive core may have a relatively low resistance at high temperatures. The insulating material may have electrical resistance, compressive strength and heat conductivity properties that are relatively high at high temperatures. The insulating layer may inhibit arcing from the core to the metallic sheath. The metallic sheath may have tensile strength and creep resistance properties that are relatively high at high temperatures.

U.S. Patent No. 5,060,287 to Van Egmond describes an electrical heating element having a copper-nickel alloy core.

The heating system according to the preamble of claim 1 is known from U.S. patent No. 4,704,514. In the known system a series of mineral insulated electrically conductive heater members are suspended in a cased fluid filled section of a heater well by a support member.

Disadvantages of the known electrical heaters is that they are expensive, require complex installation procedures and are prone to overheating, rupture and/or melting so that they may require frequent replacement in particular if they are used to heat a long interval of a downhole formation.

It is an object of the present invention to provide an improved inexpensive downhole electrical well heating method and system which are configured to transmit a controlled amount of heat in a uniform manner into the formation over a long period of time.

### Summary of the Invention

The system and method for transmitting heat into a hydrocarbon containing formation in accordance with the present invention are described in claims 1 and 6. Optionally, at least one elongated electrically conductive heater member comprises an at least partly bare metal strip, rod, cable, conduit or other conductor.

It is preferred that at least one metal heater member is suspended in an uncased lower section of a heater well by an elongate support member which extends from e.g. a wellhead at or near the earth surface into said uncased lower section of the heater well. The elongate support member may comprise an elongate tube on which a series of centralisers are mounted at selected intervals, which centralizers support a plurality of bare metal heater members.

Optionally, one or more bare metal heater members are U-shaped and are each electrically connected at their upper ends to power supply conduits which supply electrical power from an electric source to the ends of the U-shaped bare metal heater member, and wherein the U-shaped bare metal heater member, power supply conduits and electric power source form an electric circuit.

The tubular elongate support member may be provided with a series of orifices through which in use an oxidant is injected adjacent to at least part of the length of the metal heater members, which oxidant burns away hydrocarbons released by the surrounding hydrocarbon formation and deposited on the surface of the metal heater members. The tubular elongate support member may extend through a packer near a lower end of a cased upper section of the heater well to a wellhead.

Optionally, the metal heater members and centralizers are located in an uncased lower section of the heater well, which lower section traverses a hydrocarbon containing formation.

In an embodiment of the method according to the invention, the assembly of one or more heater members is configured to transmit in use a cumulative amount of radiant heat between 0.5 and 1.5 KW per meter length of the heater well into the formation, thereby heating hydrocarbons in the formation in the vicinity of the heater well to a temperature above 280 degrees Celsius and causing in-situ pyrolysis of hydrocarbons in the formation.

If in use an oxidant, such as air, is injected into an uncased lower section of the heater well, the oxidant may at least partly burn away hydrocarbon deposits on the elongate heater members, thereby cleaning the heater members and reducing the risk of arcing and short-circuiting. Combustion gases may be vented to surface via an exhaust conduit extending through a cased upper part of the heater well, and that the fluid pressure in the uncased lower part is controlled such that transfer of combustion gases into the formation is inhibited and that transfer of pyrolised hydrocarbon fluids from the formation at a distance of more than a meter from the heater well into the uncased lower part of the heater well is also inhibited. Said fluid pressure is preferably maintained at a minimum level of 1.5 bar and is controlled in conjunction with an assessed temperature in a part of the formation in which hydrocarbons are pyrolysed. Control of the pressure may be desired in order to maintain conditions favourable to the formation of better quality hydrocarbons during pyrolysis. It may also be desired, during certain times, to maintain a minimum average pressure in the process zone, dependent on the thickness and weight of the overlaying. The selected pressure may contribute to surporting the weight of overlaying layers and thus may mitigate compaction and subsidence

The hydrocarbon containing formation may be a coal, oil-shale, kerogen or a bitumen deposit. The method preferably comprises transmitting between 0.5 and 1.5 KW radiant heat per meter length of the heater well into a portion of the hydrocarbon containing formation surrounding the heater well thereby heating at least a portion of the formation surrounding the heater well to pyrolyze hydrocarbons within said portion of the formation surrounding the heater well, wherein a majority of pyrolysed hydrocarbons are induced to flow to a production well which is located at a selected distance of between 3 and 15 meter from the heat injection well.

The assembly may consist of at least one and preferably more than one heat injector wells and it may also consist of one and preferably more than one production wells.

An advantage of arranging the heater member(s) in an at least partly uncased section of the heater well is that the cost of installing and/or replacing a casing in the hottest section of the heater well is saved. Casings that are cemented or otherwise supported in the heater well are subject to high stresses as a result of the thermal expansion of the surrounding formation in combination with the radial and longitudinal expansion of the heated casing itself and the resulting high stresses may therefore limit the amount of heat that can be transmitted into the formation from the heater well.

### Description of preferred embodiments

The invention will be described in more detail and by way of example with reference to the accompanying drawing, in which:

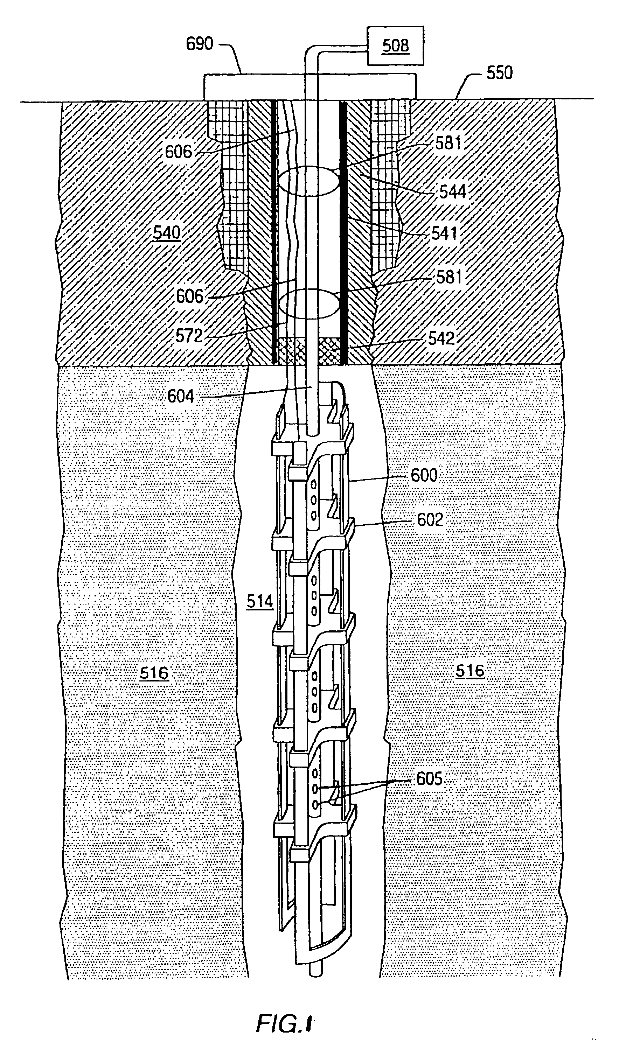

Fig.1 depicts a heater well in which an assembly of bare strip electrical conductors are suspended by means of a support member.

As shown in Fig.1 a number of elongate heater members 600 may be disposed within an opening 514 (e.g., an open heater wellbore) in a hydrocarbon containing formation 516. The opening 514 may preferably be an at least partly uncased opening in the hydrocarbon containing formation 516. The opening 514 may have a diameter of at least approximately 5 cm or, for example, approximately 8 cm. The diameter of the opening 514 may vary, however, depending on, for example, a desired heating rate in the formation. The elongate heater member(s) 600 may be a length (e.g., a strip) of metal or any other elongated piece of metal (e.g., a rod) and may be made of stainless steel. The elongated heater member(s) 600, however, may also include any conductive material configurable to generate heat to sufficiently heat a portion of the formation and to substantially withstand a corresponding temperature within the opening, for example, it may be configured to withstand corrosion at the temperature within the opening.

The elongate heater member(s) 600 may comprise one or more bare metal heaters. "Bare metal" refers to a metal that does not include a layer of electrical insulation, such as mineral insulation, that is designed to provide electrical insulation for the metal throughout an operating temperature range of the elongated member. Bare metal may encompass a metal that includes a corrosion inhibiter such as a naturally occurring oxidation layer, an applied oxidation layer, and/or a film. Bare metal includes metal with polymeric or other types of electrical insulation that cannot retain electrical insulating properties at typical operating temperature of the elongated member. Such material may be placed on the metal and may be thermally degraded during use of the heater.

Each elongate heater member 600 may have a length of about 650 meters. Longer lengths may be achieved using sections of high strength alloys, but such elongated members may be expensive. In some embodiments, an elongated member may be supported by a plate in a wellhead. The elongate heater member(s) 600 may include sections of different conductive materials that are welded together end-to-end. A large amount of electrically conductive weld material may be used to couple the separate sections together to increase strength of the resulting member and to provide a path for electricity to flow that will not result in arcing and/or corrosion at the welded connections. The different conductive materials may include alloys with a high creep resistance. The sections of different conductive materials may have varying diameters to ensure uniform heating along the elongated member. A first metal that has a higher creep resistance than a second metal typically has a higher resistivity than the second metal. The difference in resistivities may allow a section of larger cross sectional area, more creep resistant first metal to dissipate the same amount of heat as a section of smaller cross sectional area second metal. The cross sectional areas of the two different metals may be tailored to result in substantially the same amount of heat dissipation in two welded together sections of the metals. The conductive materials may include, but are not limited to, 617 Inconel, HR-120, 316 stainless steel, and 304 stainless steel. For example, an elongated member may have a 60 meter section of 617 Inconel, 60 meter section of HR-120, and 150 meter section of 304 stainless steel. In addition, the elongated member may have a low resistance section that may run from the wellhead through the overburden. This low resistance section may decrease the heating within the formation from the wellhead through the overburden. The low resistance section may be the result of, for example, choosing a substantially electrically conductive material and/or increasing the cross-sectional area available for electrical conduction.

Alternately, a support member 604 may extend through the overburden 540, and the bare metal elongated member or members may be coupled to a plate, centralizer or other type of support member near an interface between the overburden and the hydrocarbon formation. A low resistivity cable 606, such as a stranded copper cable, may extend along the support member and may be coupled to the elongated member or members. The copper cable may be coupled to a power source that supplies electricity to the elongated member or members.

FIG. 1 illustrates an embodiment of a plurality of elongated members configured to heat a section of a hydrocarbon containing formation. Two or more (e.g., four) elongated members 600 may be supported by support member 604. Elongated members 600 may be coupled to support member 604 using insulated centralizers 602. Support member 604 may be a tube or conduit. Support member 604 may also be a perforated tube. Support member 604 may be configured to provide a flow of an oxidizing fluid into opening 514. Support member 604 may have a diameter between about 1.2 cm to about 4 cm and more preferably about 2.5 cm. Support member 604, elongated members 600, and insulated centralizers 602 may be disposed in opening 514 in formation 516. Insulated centralizers 602 may be configured to maintain a location of elongated members 600 on support member 604 such that lateral movement of elongated members 600 may be substantially inhibited at temperatures high enough to deform support member 604 or elongated members 600. Insulated centralizers 602 may be a centralizer as described herein. Elongated members 600, in some embodiments, may be metal strips of about 2.5 cm wide and about 0.3 cm thick stainless steel. Elongate heater members 600, however, may also include a pipe or a rod formed of a conductive material. Electrical current may be applied to elongate heater members 600 such that the elongate heater members 600 may generate heat due to electrical resistance.

The elongate heater members 600 may be configured to generate heat of approximately 650 watts per meter of elongated members 600 to approximately 1650 watts per meter of elongated members 600. In this manner, elongated members 600 may be at a temperature of approximately 480 °C to approximately 815 °C. Substantially uniform heating of a hydrocarbon containing formation may be provided along a length of elongated members 600 greater than about 305 m or, maybe, greater than about 610 m. A length of elongated members 600 may vary, however, depending on, for example, a type of hydrocarbon containing formation, a depth of an opening in the formation, and/or a length of the formation desired for treating

The elongate heater members 600 may be electrically coupled in series. Electrical current may be supplied to elongated members 600 using lead-in conductor 572. Lead-in conductor 572 may be further configured as described herein. Lead-in conductor 572 may be coupled to wellhead 690. Electrical current may be returned to wellhead 690 using lead-out conductor 606 coupled to elongated member 600. Lead-in conductor 572 and lead-out conductor 606 may be coupled to wellhead 690 at surface 550 through a sealing flange located between wellhead 690 and overburden 540. The sealing flange may substantially inhibit fluid from escaping from opening 514 to surface 550. Lead-in conductor 572 and lead-out conductor 606 may be coupled to elongate members using a cold pin transition conductor. The cold pin transition conductor may include an insulated conductor of substantially low resistance such that substantially no heat may generated by the cold pin transition conductor. The cold pin transition conductor may be coupled to lead-in conductor 572, lead-out conductor 606, and/or elongated members 600 by any splicing or welding methods known in the art. The cold pin transition conductor may provide a temperature transition between lead-in conductor 572, lead-out conductor 606, and/or elongated members 600. The cold pin transition conductor may be further configured as described in any of the embodiments herein. Lead-in conductor 572 and lead-out conductor 606 may be made of low resistance conductors such that substantially no heat may be generated from electrical current passing through lead-in conductor 572 and lead-out conductor 606.

Weld beads may be placed beneath the centralizers 602 on the support member 604 to fix the position of the centralizers. Weld beads may be placed on the elongated members 600 above the uppermost centralizer to fix the position of the elongated members relative to the support member (other types of connecting mechanisms may also be used). When heated, the elongated member may thermally expand downwards. The elongated member may be formed of different metals at different locations along a length of the elongated member to allow relatively long lengths to be formed. For example, a "U" shaped elongated member may include a first length formed of 310 stainless steel, a second length formed of 304 stainless steel welded to the first length, and a third length formed of 310 stainless steel. 310 stainless steel is more resistive than 304 stainless steel and may dissipate approximately 25% more energy per unit length than 304 stainless steel of the same dimensions. 310 stainless steel may be more creep resistant than 304 stainless steel. The first length and the third length may be formed with cross sectional areas that allow the first length and third lengths to dissipate as much heat as a smaller cross area section of 304 stainless steel. The first and third lengths may be positioned close to the wellhead 690. The use of different types of metal may allow the formation of long elongated members. The different metals may be, but are not limited to, 617 Inconel, HR120, 316 stainless steel,310 stainless steel, and 304 stainless steel.

Packing material 542 may be placed between overburden casing 541 and opening 514. Packing material 542 may be configured to inhibit fluid flowing from opening 514 to surface 550 and to inhibit corresponding heat losses towards the surface. Packing material 542 may be further configured as described herein. Overburden casing 541 may be placed in cement 544 in overburden 540 of formation 516. Overburden casing 541 may be further configured as described herein. Surface conductor 545 may be disposed in cement 544. Surface conductor 545 may be configured as described herein. Support member 604 may be coupled to wellhead 690 at surface 550 of formation 516. Centralizer 581 may be configured to maintain a location of support member 604 within overburden casing 541. Centralizer 581 may be further configured as described herein. Electrical current may be supplied to elongated members 600 to generate heat. Heat generated from elongated members 600 may radiate within opening 514 to heat at least a portion of formation 516.

An oxidizing fluid may be provided along a length of the elongated members 600 from oxidizing fluid source 508. The oxidizing fluid may inhibit carbon deposition on or proximate to the elongated members. For example, the oxidizing fluid may react with hydrocarbons to form carbon dioxide, which may be removed from the opening. Openings 605 in support member 604 may be configured to provide a flow of the oxidizing fluid along the length of elongated members 600. Openings 605 may be critical flow orifices as configured and described herein. Alternatively, a tube may be disposed proximate to elongated members 600 to control the pressure in the formation as described in above embodiments. In another embodiment, a tube may be disposed proximate to elongated members 600 to provide a flow of oxidizing fluid into opening 514. Also, at least one of elongated members 600 may include a tube having openings configured to provide the flow of oxidizing fluid. Without the flow of oxidizing fluid, carbon deposition may occur on or proximate to elongated members 600 or on insulated centralizers 602, thereby causing shorting between elongated members 600 and insulated centralizers 602 or hot spots along elongated members 600. The oxidizing fluid may be used to react with the carbon in the formation as described herein. The heat generated by reaction with the carbon may complement or supplement the heat generated electrically.

In an embodiment, a plurality of elongated members may be supported on a support member disposed in the heater well or other opening. The plurality of elongated members may be electrically coupled in either a series or parallel configuration. A current and voltage applied to the plurality of elongated members may be selected such that the cost of the electrical supply of power at the surface in conjunction with the cost of the plurality of elongated members may be minimized. In addition, an operating current and voltage may be chosen to optimize a cost of input electrical energy in conjunction with a material cost of the elongated members. The elongated members may be configured to generate and radiate heat as described herein. The elongated members may be installed in opening 514 as described herein.

In an embodiment, a bare metal elongated member may be formed in a "U" shape (or hairpin) and the member may be suspended from a wellhead or from a positioner placed at or near an interface between the overburden and the formation to be heated. In certain embodiments, the bare metal heaters are formed of rod stock. Cylindrical, high alumina ceramic electrical insulators may be placed over legs of the elongated members. Tack welds along lengths of the legs may fix the position of the insulators. The insulators may inhibit the elongated member from contacting the formation or a well casing (if the elongated member is placed within a well casing). The insulators may also inhibit legs of the "U" shaped members from contacting each other. High alumina ceramic electrical insulators may be purchased from Cooper Industries (Houston, Texas). In an embodiment, the "U" shaped member may be formed of different metals having different cross sectional areas so that the elongated members may be relatively long and may dissipate substantially the same amount of heat per unit length along the entire length of the elongated member. The use of different welded together sections may result in an elongated member that has large diameter sections near a top of the elongated member and a smaller diameter section or sections lower down a length of the elongated member. For example, an embodiment of an elongated member has two 7/8 inch (2.2 cm) diameter first sections, two 1/2 inch (1.3 cm) middle sections, and a 3/8 inch (0.95 cm) diameter bottom section that is bent into a "U" shape. The elongated member may be made of materials with other cross section shapes such as ovals, squares, rectangles, triangles, etc. The sections may be formed of alloys that will result in substantially the same heat dissipation per unit length for each section.

The cross sectional area and/or the metal used for a particular section may be chosen so that a particular section provides greater (or lesser) heat dissipation per unit length than an adjacent section. More heat dissipation per unit length may be provided near an interface between a hydrocarbon layer and a non-hydrocarbon layer (e.g., the overburden and the hydrocarbon containing formation) to counteract end effects and allow for more uniform heat dissipation into the hydrocarbon containing formation. A higher heat dissipation may also be located at a lower end of an elongated member to counteract end effects and allow for more uniform heat dissipation.

A difference in heat dissipation into different sections may be required to cause favourable physicochemical differences in the pyrolysis process leading to more favourable hydrocarbon product quality.

The electric heater may be configured to provide heat in addition to heat provided from a surface combustor. The electric heater may be configured to provide the additional heat to a hydrocarbon containing formation such that the hydrocarbon containing formation may be heated substantially uniformly along a selected depth of the heater well.

## Claims

1. A system configured to heat an underground hydrocarbon containing formation (516), comprising an electrical conductor configured to be disposed within a heater well (514) traversing the formation to provide radiant heat to at least a portion of the formation during use to pyrolyse hydrocarbons in said portion, wherein the electrical conductor comprises a plurality of electrically conductive heater members (600) which are each suspended in a fluid filled section of the heater well by an elongate support member (604), and a series of centralizers (602) that are mounted at selected intervals on said support member (604), **characterised in that** said heater members (600), support member (604) and centralizers (602) are suspended in an uncased lower section of the heater well which traverses the hydrocarbon containing formation (516), and that the elongate support member (604) is tubular and provided with a series of orifices (605) through which in use an oxidant is injected adjacent to at least part of the length of the heater members (600), which oxidant burns away hydrocarbons released by the surrounding hydrocarbon formation and deposited on the surface of the heater members (600) or centralizers (602), and that the tubular elongate support member (604) optionally extends through a packer near a lower end of a cased upper section of the heater well (514) to a wellhead (690).

2. The system of claim 1, wherein at least one elongate electrically conductive heater member (600) comprises an at least partly bare metal strip, rod or conduit.

3. The system of claims 1 or 2, wherein said elongate support member (604) extends from a wellhead (690) at or near the earth surface (550) into said uncased lower section of the heater well (514).

4. The system of claim 3, wherein the elongate electrically conductive heater members (600) comprise bare metal heater members.

5. The system of claim 4, wherein at least one of the bare metal heater members (600) is U-shaped and is electrically connected at an upper end thereof to power supply conduits (572,606) which supply electrical power from an electric source (508) to the ends of the U-shaped bare metal heater member (600), and wherein the U-shaped bare metal heater member (600), power supply conduits (572,606) and electric power source (508) form an electric circuit.

6. A method of heating a hydrocarbon containing formation with the system of any one of claims 1 to 5, wherein the assembly of heater members (600) is configured to transmit in use a cumulative amount of radiant heat between 0.5 and 1.5 KW per meter length of the heater well into the formation (516), thereby heating hydrocarbons in the formation in the vicinity of the heater well (514) to a temperature above 280 degrees Celsius and causing in-situ pyrolysis of hydrocarbons in the formation (516) wherein the elongate heater members (600) are supported by a series of centralisers (602) that are mounted at regular intervals on a support member (604), **characterised in that** the support member (604) is tubular and provided with a series of orifices (605) through which an oxidant, such as air, is injected into an uncased lower section of the heater well (514), which oxidant at least partly burns away hydrocarbon deposits on the elongate heater members (600), and that the elongate heater members (600) are arranged in an uncased lower section of the heater well (514) and combustion gases are vented to surface via an exhaust conduit extending through a cased upper part of the heater well (514).

7. The method of claim 6, wherein a the fluid pressure in the uncased lower part of the heater well (514) is controlled such that transfer of combustion gases into the formation (516) is inhibited and that transfer of pyrolysed hydrocarbon fluids from the formation (516) at a distance of more than a meter from the heater well (514) into the uncased lower part of the heater well (514) is also inhibited.

8. The method of claim 7, wherein the fluid pressure is maintained at a minimum level of 1.5 bar and is controlled in conjunction with an assessed temperature in a part of the formation (516) in which hydrocarbons are pyrolysed.

9. The method of any one of claims 6 to 8, wherein the hydrocarbon containing formation (516) is an underground coal, oil-shale, kerogen or a bitumen deposit.

10. A method of producing hydrocarbons from a hydrocarbon containing formation (516) by means of the method according to any one of claims 6-9.

## Patentansprüche

1. System zum Erhitzen einer unterirdischen kohlenwasserstoffhaltigen Formation (516), mit einem elektrischen Leiter, der so ausgebildet ist, daß er innerhalb eines Heizbohrloches (514) angeordnet wird, welches die Formation durchsetzt, um zumindest an einen Teil der Formation während des Betriebes Strahlungshitze zum Pyrolysieren von Kohlenwasserstoffen in diesem Teil zu liefern, wobei der elektrische Leiter eine Vielzahl von elektrisch leitenden Heizelementen (600) aufweist, die jeweils in einem fluidgefüllten Abschnitt des Heizschachtes mit Hilfe eines langgestrecktes Tragelementes (604) aufgehängt sind, und einer Reihe von Zentralisierern (602), die in ausgewählten Intervallen an dem Tragelement (604) montiert sind, **dadurch gekennzeichnet, daß** die Heizelemente (600), das Tragelement (604) und die Zentralisierer (602) in einem nicht ausgekleideten unteren Abschnitt des Heizbohrloches aufgehängt sind, welcher die kohlenwasserstoffhaltige Formation (516) durchsetzt, und daß das langgestreckte Tragelement (604) rohrförmig und mit einer Reihe von Öffnungen (605) versehen ist, durch welche im Betrieb ein Oxidiermittel nahe zumindest einem Teil der Länge der Heizelemente (600) eingespritzt wird, welches Oxidiermittel Kohlenwasserstoffe wegbrennt, die von der umgebenden kohlenwasserstoffhaltigen Formation freigesetzt und auf der Oberfläche der Heizelemente (600) oder den Zentralisierern (602) abgelagert werden, und daß sich das rohrförmige langgestreckte Tragelement (604) gegebenenfalls durch eine Dichtung nahe einem unteren Ende eines ausgekleideten oberen Teiles des Heizbohrloches (514) zu einem Bohrlochkopf (690) erstreckt.

2. System nach Anspruch 1, bei welchem zumindest ein langgestrecktes elektrisch leitendes Heizelement (600) einen zumindest teilweise nackten Metallstreifen, einen Metallstab oder eine Metalleitung umfaßt.

3. System nach Anspruch 1 oder 2, bei welchem sich das langgestreckte Tragelement (604) von einem Bohrlochkopf (690) an oder nahe der Erdoberfläche (550) in den nicht ausgekleideten unteren Abschnitt des Heizbohrloches (514) erstreckt.

4. System nach Anspruch 3, bei welchem die langgestreckten elektrisch leitenden Heizelemente (600) nackte Metallheizelemente aufweisen.

5. System nach Anspruch 4, bei welchem zumindest eines der nackten Metallheizelemente (600) U-förmig ist und elektrisch mit einem oberen Ende desselben an Energiezufuhrleitungen (572, 606) angeschlossen ist, welche den Enden des U-förmigen nackten Metallheizelementes (600) elektrische Energie von einer elektrischen Energiequelle (508) zuführen, und wobei das U-förmige nackte Metallheizelement (600), die Energiezufuhrleitungen (572, 606) und die elektrische Energiequelle (508) einen elektrischen Kreis bilden.

6. Verfahren zum Erhitzen einer kohlenwasserstoffhaltigen Formation mit dem System nach einem der Ansprüche 1 bis 5, bei welchem die Anordnung von Heizelementen (600) so ausgebildet ist, daß sie im Betrieb eine kumulative Menge an Strahlungshitze zwischen 0,5 und 1,5 kW pro Meter Länge des Heizbohrloches in die Formation (516) abgeben, wodurch Kohlenwasserstoffe in der Formation in der Nähe des Heizbohrloches (514) auf eine Temperatur von über 280 Grad Celsius erhitzt werden, und eine in situ-Pyrolyse der Kohlenwasserstoffe in der Formation (516) verursacht wird, wobei die langgestreckten Heizelemente (600) durch eine Reihe von Zentralisierern (602) abgestützt sind, die in regelmäßigen Intervallen an einem Tragelement (604) vorgesehen sind, **dadurch gekennzeichnet, daß** das Tragelement (604) rohrförmig und mit einer Reihe von Öffnungen (605) versehen ist, durch welche ein Oxidiermittel, wie Luft, in einen nicht ausgekleideten unteren Abschnitt des Heizbohrloches (514) eingespritzt wird, welches Oxidiermittel zumindest teilweise Kohlenwasserstoffablagerungen auf den langgestreckten Heizelementen (600) wegbrennt, und daß die langgestreckten Heizelemente (600) in einem nicht ausgekleideten unteren Abschnitt des Heizbohrloches (514) angeordnet sind, und Verbrennungsgase zur Oberfläche über eine Abgasleitung entlüftet werden, die sich durch einen ausgekleideten oberen Teil des Heizbohrloches (514) erstreckt.

7. Verfahren nach Anspruch 6, bei welchem der Fluiddruck in dem nicht ausgekleideten unteren Teil des Heizbohrloches (514) gesteuert wird, derart, daß die Übertragung der Verbrennungsgase in die Formation (516) verhindert wird, und die Übertragung der pyrolysierten Kohlenwasserstofffluide aus der Formation (516) in einem Abstand von mehr als einem Meter vom Heizbohrloch (514) in den nicht ausgekleideten unteren Teil des Heizbohrloches (415) ebenfalls verhindert wird.

8. Verfahren nach Anspruch 7, bei welchem der Fluiddruck auf einer Mindesthöhe von 1,5 bar gehalten und in Verbindung mit einer vorbestimmten Temperatur in einem Teil der Formation (516) gesteuert wird, in welcher die Kohlenwasserstoffe pyrolysiert werden.

9. Verfahren nach einem der Ansprüche 6 bis 8, bei welchem die kohlenwasserstoffhaltige Formation (516) eine unterirdische Kohle-, Öl-Schiefer-, Kerogen- oder Bitumenablagerung ist.

10. Verfahren zum Erzeugen von Kohlenwasserstoffen aus einer kohlenwasserstoffhaltigen Formation (516) mittels des Verfahrens nach einem der Ansprüche 6-9.

## Revendications

1. Un système, configuré pour chauffer une formation souterraine (516) contenant des hydrocarbures, comprenant un conducteur électrique, configuré pour être disposé à l'intérieur d'un puits chauffeur (514), traversant la formation pour fournir de la chaleur par rayonnement à au moins une partie de la formation durant l'utilisation, afin de pyrolyse des hydrocarbures se trouvant dans ladite partie, dans lequel le conducteur électrique comprend une pluralité d'éléments chauffants (600) conducteurs de l'électricité, chacun suspendu dans une section, remplie d'un fluide, du puits chauffant, à l'aide d'un élément support (604) allongé, et une série de centralisateurs (602), montés en des intervalles sélectionnés sur ledit élément support (604), **caractérisé en ce que** lesdits éléments chauffants (600), l'élément support (604) et des centralisateurs (602) sont suspendus dans une section inférieure non chemisée du puits chauffeur qui traverse la formation (516) contenant des hydrocarbures, et **en ce que** l'élément chauffant (604) allongé est de nature tubulaire et muni d'une série d'orifices (605), par lesquels, en utilisation, un oxydant est injecté en un emplacement adjacent à au moins une partie de la longueur des éléments chauffants (600), ledit oxydant brûlant les hydrocarbures dégagés par la formation d'hydrocarbure environnante et déposés sur la surface des éléments chauffants (600) ou des centralisateurs (602), et **en ce que** l'élément support (604) allongé tubulaire, en option, s'étend à travers une garniture d'étanchéité, située à proximité d'une extrémité inférieure d'une section supérieure chemisée du puits chauffant (515), vers une tête de puits (690).

2. Le système selon la revendication 1, dans lequel au moins un élément chauffant (600) conducteur de l'électricité allongé comprend une bande, une tige ou un conduit métallique au moins partiellement nu.

3. Le système selon la revendication 1 ou 2, dans lequel ledit élément chauffant (604) allongé s'étend depuis une tête de puits (690) située à ou près de la surface de la terre (550), dans ladite section inférieure non chemisée du puits chauffant (514).

4. Le système selon la revendication 3, dans lequel les éléments chauffants (600) conducteurs d'électricité allongés comprennent des éléments chauffant métalliques nus.

5. Le système selon la revendication 4, dans lequel au moins l'un des éléments chauffants (600) métalliques nus est en forme de U et est relié électriquement, à une extrémité supérieure de celui-ci, à des conduits d'alimentation en énergie (572, 606), fournissant de l'énergie électrique depuis une source électrique (508), vers les extrémités de l'élément chauffant (600) métallique nu en forme de U, et dans lequel l'élément chauffant (600) métallique nu en forme de U, les conduits d'alimentation en énergie (572, 606) et la source d'énergie électrique (508), forment un circuit électrique.

6. Un procédé de chauffage d'une formation contenant des hydrocarbures, à l'aide du système selon l'une quelconque des revendications 1 à 5, dans lequel l'ensemble d'éléments chauffants (600) est configuré pour transmettre, en utilisation, une quantité cumulative de chaleur de rayonnement, entre 0,5 et 1,5 kW par longueur métrique, du puits chauffant, dans la formation (516), de manière à chauffer des hydrocarbures, présents dans la formation à proximité du puits chauffant (514), à une température supérieure à 280°C, et à provoquer une pyrolyse in-situ des hydrocarbures présents dans la formation (516), dans lequel les éléments chauffants (600) allongés sont supportés par une série de centralisateurs (602) qui sont montés à des intervalles réguliers sur un élément support (604), **caractérisé en ce que** l'élément support (604) est de nature tubulaire et muni d'une série d'orifices (605), par lesquels un oxydant, tel que de l'air est injecté dans une section inférieure non chemisée du puits chauffant (514), ledit oxydant brûlant au moins partiellement les dépôts d'hydrocarbure se trouvant sur les éléments chauffants (600) allongés, et **en ce que** les éléments chauffants (600) allongés sont agencés dans une section inférieure non chemisée du puits chauffant (514), et des gaz de combustion sont aérés vers la surface, via un conduit d'échappement s'étendant par une partie supérieure chemisée du puits chauffant (514).

7. Le procédé selon la revendication 6, dans lequel la pression de fluide dans la partie inférieure non chemisée du puits chauffant (514) est commandée de manière que le transfert des gaz de combustion dans la formation (516) soit empêché, et que le transfert des fluides hydrocarbures pyrolysés venant de la formation (514), à une distance de plus d'un mètre du puits chauffant (514) dans la partie inférieure non chemisée du puits chauffant (514), soit également empêché.

8. Le procédé selon la revendication 7, dans lequel la pression de fluide est maintenue à un niveau minimum de 1,5 bar et est commandée, en liaison avec une température estimée dans une partie de la formation (516), dans laquelle des hydrocarbures sont pyrolysés.

9. Le procédé selon l'une quelconque des revendications 6 à 8, dans lequel la formation contenant des hydrocarbures (516) est un dépôt souterrain de charbon, de schiste bitumineux, de kérogène ou un bitume.

10. Un procédé de production d'hydrocarbures à partir d'une formation contenant des hydrocarbures (516), à l'aide du procédé selon l'une quelconque des revendications 6 à 9.
